(19) **Europäisches Patentamt / European Patent Office / Office européen des brevets**

(11) **EP 3 997 987 B1**

(12) **EUROPEAN PATENT SPECIFICATION**

(45) Date of publication and mention
of the grant of the patent:
**03.09.2025 Bulletin 2025/36**

(21) Application number: **20837796.0**

(22) Date of filing: **23.06.2020**

(51) International Patent Classification (IPC):
**A23L 19/00** *(2016.01)*    **A23L 27/10** *(2016.01)*

(52) Cooperative Patent Classification (CPC):
(C-Sets available)
**A23L 5/12; A23L 19/03; A23L 19/09;**
**A23L 27/2052;** A23V 2002/00    (Cont.)

(86) International application number:
**PCT/JP2020/024643**

(87) International publication number:
**WO 2021/006035 (14.01.2021 Gazette 2021/02)**

(54) **FOOD PRODUCT CONTAINING HEATED VEGETABLE SUBSTANCE, COOKED VEGETABLE PROCESSED SUBSTANCE-CONTAINING FOOD PRODUCT, METHOD FOR PRODUCING THE SAME, AND METHOD FOR REDUCING UNDESIRABLE TASTE OF VEGETABLE**

LEBENSMITTELPRODUKT MIT SUBSTANZ AUS ERHITZTEM GEMÜSE, LEBENSMITTELPRODUKT MIT VERARBEITETER SUBSTANZ AUS GEKOCHTEM GEMÜSE, VERFAHREN ZUR HERSTELLUNG DAVON UND VERFAHREN ZUR VERMINDERUNG DES UNERWÜNSCHTEN GESCHMACKS VON GEMÜSE

PRODUIT ALIMENTAIRE CONTENANT UNE SUBSTANCE VÉGÉTALE CHAUFFÉE, PRODUIT ALIMENTAIRE CONTENANT UNE SUBSTANCE VÉGÉTALE TRAITÉE CUITE, SON PROCÉDÉ DE PRODUCTION ET PROCÉDÉ DE RÉDUCTION DU GOÛT INDÉSIRABLE D'UN LÉGUME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.07.2019 JP 2019129276**

(43) Date of publication of application:
**18.05.2022 Bulletin 2022/20**

(73) Proprietor: **Mizkan Holdings Co., Ltd.**
**Handa-shi, Aichi 475-8585 (JP)**

(72) Inventor: **FUJIWARA, Anna**
**Handa-shi, Aichi 475-8585 (JP)**

(74) Representative: **Mewburn Ellis LLP**
**Aurora Building**
**Counterslip**
**Bristol BS1 6BX (GB)**

(56) References cited:
**WO-A1-2020/098950    JP-A- 2004 267 128**
**JP-A- 2004 267 128**

• **TOKITOMO YUKIKO: "Flavor constituents of roasted onions of different cultivars, and comparison of their aroma patterns", NIPPON SHOKUHIN KOGYO GAKKAISHI - JOURNAL OF FOOD SCIENCE AND TECHNOLOGY, NIPPON SHOKUHIN KAGAKUKOUGAKUKAI, JP, vol. 42, no. 12, 1 January 1995 (1995-01-01), pages 1003 - 1011, XP009514335, ISSN: 0029-0394, DOI: 10.3136/NSKKK.42.1003**
• **YUKIKO TOKITOMO: "Volatile Components of Cooked Onions", JOURNAL OF JAPANESE SOCIETY OF FOOD SCIENCE AND TECHNOLOGY, vol. 42, no. 4, 15 April 1995 (1995-04-15), JP, pages 279 - 287, XP055748442, ISSN: 1341-027X, DOI: 10.3136/nskkk.42.279**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

- **VILLIÈRE ANGÉLIQUE ET AL: "Evaluation of aroma profile differences between sué, sautéed, and pan-fried onions using an innovative olfactometric approach", vol. 4, no. 1, 1 December 2015 (2015-12-01), XP055944936, Retrieved from the Internet <URL:https://flavourjournal.biomedcentral.com/track/pdf/10.1186/s13411-015-0034-0.pdf> DOI: 10.1186/s13411-015-0034-0**
- **TOKITOMO, YUKIKO: "Flavor Constituents of Roasted Onions of Different Cultivars, and Comparison of their Aroma Patterns", NIPPON SHOKUHIN KAGAKU KAISHI, vol. 42, no. 12, 1995, pages 1003 - 1011, XP009514335, DOI: 10.3136/nskkk.42.1003**
- **TOKITOMO, YUKIKO: "Volatile Components of Cooked Onions", NIPPON SHOKUHIN KAGAKU KOGAKU KAISHI, vol. 42, no. 4, 1995, pages 279 - 287, XP055748442, DOI: 10.3136/nskkk.42.279**

(52) Cooperative Patent Classification (CPC): (Cont.)

C-Sets
A23V 2002/00, A23V 2200/15, A23V 2200/16, A23V 2250/21, A23V 2300/24

Description

## TECHNICAL FIELD

The present invention, which is defined by the claims, relates to a food containing heat-treated vegetable and a process of producing the same, as well as a method for reducing unpleasant taste of vegetable.

## BACKGROUND ART

Consumers want to eat vegetables actively because of their unique rich taste and high nutritional values. However, consumers tend not prefer seasoned foods with enhanced vegetable contents, due to their unique raw smell and unpleasant taste.

Various researchs and reports have been made regarding the reduction of the unpleasant taste of vegetables. For example, Patent Document 1 discloses an onion extract prepared via heat-cooking under specific conditions, which extract can easily provide foods with strong sweetness and rich taste of heated onion. Patent Document 2 discloses a spice composition which can provide spicy vegetable's unique flavor and mellow cooked feel. A flavour composition comprising sauteed onions is disclosed in JP 2004/267128 A. The flavour constituents of roasted onions are described in Tokitomo Y, Nippon Shokuhin Kagaku Kaishi Vo1.42; 12: 1003-1011 (1995).

Although these techniques can be used for adding heat-cooked feel to vegetables, neither technique is sufficient to reduce the unpleasant taste of vegetables.

## LIST OF CITATIONS

### Patent Literature

[Patent Literature 1] JP2010-142147A
[Patent Literature 2] JP2003-000181A

## SUMMARY OF INVENTION

### PROBLEM TO BE SOLVED BY THE INVENTION

A purpose of the present invention, which is defined by the claims, is to provide a food containing heat-treated vegetable that can reduce the unpleasant taste of vegetables while adding cooked feel thereto, and also to provide a process of producing the same.

### MEANS TO SOLVE THE PROBLEM

The present inventors conducted extensive study, and have finally found that heat-treated vegetable containing 3,4-dimethylthiophene, 2,4-dimethylthiophene, and furfural at specific concentrations can not only add cooked feel to vegetables but also reduce the unpleasant taste of the vegetable, enabling the production of a food containing heat-treated vegetable which is much more suited to consumer preference.

Incorporation of 3,4-dimethylthiophene, 2,4-dimethylthiophene, and furfural (specific ingredients) into heat-treated vegetable can be adjusted by adding these specific ingredients as pure substances, or adding materials containing these specific ingredients, to vegetable before, during, or after heating the vegetable. Alternatively, it can also be achieved by adjusting the contents of 3,4-dimethylthiophene, 2,4-dimethylthiophene, and furfural each to within a predetermined range via heating when preparing the heat-treated vegetable.

The invention relates to the following:

[Aspect 1] A food comprising heat-treated vegetable, comprising.

(a) 3,4-dimethylthiophene (x) in a content of from 0.00035 mg/kg to 3 mg/kg;
(b) 2,4-dimethylthiophene (y) in a content of from 0.00015 mg/kg to 3 mg/kg; and
(c) furfural (z) in a content of from 0.1 mg/kg to 10 mg/kg.

[Aspect 2] A food according to aspect 1, which satisfies the following formula:

$$10 \geqq (x+y)/z \geqq 0.0005 \qquad \text{[Formula 1]}$$

[Aspect 3] A food according to aspect 1 or 2, wherein the vegetable is Allium.

[Aspect 4] A food according to aspect 3, wherein Allium is one or more selected from onion, Welsh onion (negi), leek, and garlic.

[Aspect 5] A food according to any one of aspects 1 to 4, wherein the content of the heat-treated vegetable is 1.5 mass % or more.

[Aspect 6] A process for producing a food according to any one of aspects 1 to 5, comprising:

(1) heating vegetable with stirring at a temperature of from 70°C to 120°C, until the mass of the vegetable is reduced to an amount of from 30 mass % to 70 mass % with respect to the mass of the vegetable before heating; and

(2) adding, to the heated vegetable from step (1), oil in an amount of from 1 mass % to 10 mass % with respect to the mass of the vegetable before the heating, and further heatng the vegetable with stirring at a temperature of from 70°C to 120°C; wherein the heating in step (2) is carried out until the resultant heat-treated vegetable satisfies:(a) 3,4-dimethylthiophene (x) in a content of from 0.00035 mg/kg to 3 mg/kg;(b) 2,4-dimethylthiophene (y) in a content of from 0.00015 mg/kg to 3 mg/kg; and(c) furfural (z) in a content of from 0.1 mg mg/kg to 10 mg/kg.

[Aspect 7] A process according to aspect 6, wherein step (1) comprises depressurization treatment and/or ventilation treatment.

[Aspect 8] A process according to aspect 6 or 7, further comprising, before or during step (1), adding, to the vegetable, sodium chloride in an amount of from 1% to 10% with respect to the mass of the vegetable before the heating.

[Aspect 9] A process according to any one of aspects 6 to 9, further comprising, before, during, or after the heating in step (1) and/or step (2), adding to the vegetable one or more selected from 3,4-dimethylthiophene, 2,4-dimethylthiophene, and furfural.

[Aspect 10] A method for reducing unpleasant taste of vegetable, comprising:

adjusting the contents of a food containing heat-treated vegetable so as to comprise:

(a) 3,4-dimethylthiophene (x) in a content of from 0.00035 mg/kg to 3 mg/kg;
(b) 2,4-dimethylthiophene (y) in a content of from 0.00015 mg/kg to 3 mg/kg; and
(c) furfural (z) in a content of from 0.1 mg/kg to 10 mg/kg.

## EFFECT OF THE INVENTION

The present invention, which defined by the claims, enables the production of a food containing heat-treated vegetable that not only has cooked feel of vegetables but also exhibits reduced unpleasant taste of vegetables, and is therefore much more suited to consumer preference, by simply adjusting the contents of 3,4-dimethylthiophene, 2,4-dimethylthiophene, and furfural in heat-treated vegetable to within specific ranges.

The term "cooked feel" herein means good tastes of vegetables produced by heating vegetables, including natural sweetness and flavors resulting from heating. The term "unpleasant taste" herein collectively means various unpleasant flavors scented when eating vegetables, such as raw taste/odor or pungent taste/odor of vegetables.

## MODES FOR CARRYING OUT THE INVENTION

The invention will now be described in greater details by reference to specific embodiments thereof.

In the following description, 3,4-dimethylthiophene, 2,4-dimethylthiophene, and furfural may collectively be referred to as "specific ingredients."

[Food containing heat-treated vegetable]

A first aspect of the present invention relates to a food containing heat-treated vegetable (hereinafter also referred to as "the food containing heat-treated vegetable of the present invention" or simply as "the food of the present invention") containing 3,4-dimethylthiophene, 2,4-dimethylthiophene, and furfural (specific ingredients) each in a predetermined amount. The food containing heat-treated vegetable of the present invention may either consist of heat-treated vegetable or contain one or more other materials or ingredients in addition to the heat-treated vegetable.

*Heat-treated vegetable:

The food of the present invention contains heat-treated product of vegetable. The heating time for preparing the heat-treated vegetable should not be limited. In addition to the specific ingredients resulting from the heating, the heat-treated vegetable should preferably include various other ingredients, since they may serve to improve the cooked feel and reduce the unpleasant taste. Vegetable should preferably be heated with equipment having a capacity sufficient to uniformly heat vegetable, so that uneven heating for each part is less likely to occur. Details of the heating treatment will be described later.

*Vegetables:

Vegetables to be heated according to the present invention include, although not particularly limited to: Japanese radish, carrot, burdock, rutabaga, beet (preferably beetroot: a variety of beet improved for making its root edible), parsnip, turnip, sweet potato, cassava, yacon, taro, satoimo (variety of taro), konjac potato, lotus root, potato, purple potato, yellow potato, quill, shallot, garlic, Japanese leek (rakkyo), lily bulb (yurine), Asian fawnlily (katakuri), kale, yam, Japanese yam (yamanoimo), Chinese yam (nagaimo), onion, asparagus, Japanese spikenard (udo), cabbage, lettuce, spinach, Chinese cabbage (hakusai), oilseed rape, Japanese mustard spinach (komatsuna), bok choy, Chinese chive, Welsh onion (negi), nozawana, leek, sweet coltsfoot (fuki), potherb mustard (mizuna), tomato, eggplant, pumpkin, bell pepper, cucumber, ginger, cauliflower, broccoli, bitter melon (nigauri), okra, artichoke, zucchini, suger beet, ginger, shiso (Japanese basil), and paprika. These vegetables may be used either singly or in combination of any two or more. The vegetables to be used are not limited to fresh vegetables; processed products such as frozen vegetables, water-reconstituted products of dried vegetables, salted vegetables, etc., can also preferably be used, as long as they contain moisture equivalent to fresh products.
Vegetables whose unpleasant taste can preferably be reduced according to the present invention include vegetables belonging to the genus Allium. Examples of vegetables belonging to the genus Allium include onion, Welsh onion (negi), leek, and garlic.
Vegetables can be used not only in a solid form such as whole or diced, but also in a processed form such as pulverized particles, puree, paste, or the like.

*Contents of specific ingredients:

The food containing heat-treated vegetable of the present invention contains 3,4-dimethylthiophene, 2,4-dimethylthiophene, and furfural (specific ingredients) each in a predetermined amount.
The lower limit of the content of 3,4-dimethylthiophene (x) in the food of the present invention should be 0.00035 mg/kg or more, preferably 0.0004 mg/kg or more. If the content of 3,4-dimethylthiophene (x) is below the lower limit, vegetable flavor may not be fully felt.
The upper limit of the content of 3,4-dimethylthiophene (x) in the food of the present invention should be 3 mg/kg or less, preferably 1 mg/L or less. If the content of 3,4-dimethylthiophene (x) exceeds the upper limit, pungent odor from the vegetable may be so strong as to cause disconfort.
The lower limit of the content of 2,4-dimethylthiophene (y) in the food of the present invention should be 0.00015 mg/kg or more, preferably 0.0002 mg/kg or more. If the content of 2,4-dimethylthiophene (y) is below the lower limit, vegetable taste may not be fully felt.
The upper limit of the content of 2,4-dimethylthiophene (y) in the food of the present invention should be 3 mg/kg or less, preferably 1 mg/kg or less. If the content of 2,4-dimethylthiophene (y) exceeds the upper limit, pungent odor from the vegetable may be felt strongly.
The lower limit of the content of furfural (z) in the food of the present invention should be 0.1 mg/kg or more, preferably 0.2 mg/kg or more. If the content of furfural (z) is below the lower limit, desired flavors may not be added sufficiently to reinforce cooked feel.
The upper limit of the content of furfural (z) in the food of the present invention should be 10 mg/kg or less, preferably 5 mg/kg or less, more preferably 1 mg/kg or less. If the content of furfural (z) exceeds the upper limit, the odor of furfural may be felt so strongly as to cause unnatural sweetness.
The total ratio of the content of 3,4-dimethylthiophene (x) and the content of 2,4-dimethylthiophene (y) to the content of furfural (z) in the food of the present invention, i.e., the ratio (x+y)/z, should preferably have a lower limit of 0.0005 or higher, more preferably 0.001 or higher. If the value of (x+y)/z is below the lower limit, vegetable flavor may not be fully felt.
The upper limit of the ratio (x+y)/z should be 10 or lower, preferably 7 or lower, more preferably 3 or lower. If the ratio (x+y)/z exceeds the upper limit, good cooked feel may not be sufficiently added to the heat-treated vegetable, or the pungent taste of the vegetable may not be sufficiently suppressed.

According to the present invention, the contents of 3,4-dimethylthiophene, 2,4-dimethylthiophene, and furfural in a food containing heat-treated vegetable can be measured using gas chromatography/mass spectrometry (GC/MS).

The food of the present invention is characterized by containing 3,4-dimethylthiophene, 2,4-dimethylthiophene, and furfural (specific ingredients) each in a predetermined amount, whereby not only cooked feel is provided, but also unpleasant taste is reduced.

The methods for incorporating 3,4-dimethylthiophene, 2,4-dimethylthiophene, and furfural (specific ingredients) into heat-treated vegetable include, although not particlarly limited to: a method including adding these specific ingredients as pure substances, or adding materials containing these specific ingredients, to vegetable before, during, or after heating the vegetable; and a method including adjusting the contents of 3,4-dimethylthiophene, 2,4-dimethylthiophene, and furfural each to within its desired concentration range via heating when preparing the heat-treated vegetable. The latter method is preferred, since the resultant heat-treated vegetable also includes other aroma ingredients which may involved in reducing the unpleasant taste of vegetable.

*Other materials and ingredients:

The food containing heat-treated vegetable of the present invention may also contain any other materials or ingredients in addition to vegetable and the specific ingredients (3,4-dimethylthiophene, 2,4-dimethylthiophene, and furfural). If the food of the present invention contains any materials or ingredients that are not derived from the heat-treated vegetable, examples of such materials or ingredients include, although not particularly limited to: plant-derived ingredients such as spices and herbs,; taste/flavoring ingredients such as sugars, high-intensity sweeteners, amino acid seasonings, nucleic acid seasonings, organic acid seasonings, flavor ingredients, umami seasonings, alcoholic beverages, flavor oils, flavors, and spice extracts; additives such as viscosity modifiers, stabilizers, pH adjusters, colorants; salts such as sodium chloride; oil and water. These materials and ingredients may be used either singly or in combination of any two or more at any ratios. The contents of these materials and ingredients are not particularly limited, and can be determined as appropriate depending on, e.g., usages.

*Embodiments of foods:

Embodiments of the food containing heat-treated vegetable of the present invention generally include, although not limited to: foods based mainly on the heat-treated vegetable (hereinafter referred to as foods according to the first embodiment); and foods containing the heat-treated vegetable as one of a plurality of components (hereinafter referred to as foods according to the second embodiment). Examples of the latter embodiment include foods that can fully utilize vegetable flavor, such as pasta sauce, dressing, and steak sauce.

When the food of the present invention is a food based mainly on the heat-treated vegetable (i.e., a food according to the first embodiment), the ratio of the heat-treated vegetable in the food of the present invention may be 80 mass % or more, particularly 90 mass % or more. If the ratio of the heat-treated vegetable is below the lower limit, vegetable flavor may not be sufficiently added, and the resultant taste may be unsatisfactory. On the other hand, there is no upper limit to the ratio of the heat-treated vegetable, which may be 100 mass % at maximum.

When the food of the present invention is a food containing the heat-treated vegetable as one of a plurality of components (i.e., a food according to the second embodiment), the ratio of the heat-treated vegetable in the food of the present invention is not limited, and may vary depending on, e.g., the type of the food. For example, the ratio of the heat-treated vegetable in the food of the present invention may be 1.5 mass % or more, particularly 2.5 mass % or more. If the ratio of the heat-treated vegetable is below the lower limit, vegetable flavor may not be sufficiently added, and the resultant taste may be unsatisfactory. On the other hand, the ratio of the heat-treated vegetable in the food of the present invention may be 20 mass % or less, particularly 15 mass % or less. If the ratio of the heat-treated vegetable exceeds the upper limit, the heated smell of the vegetable may be so strong that the unpleasant taste may be emphasized.

[Process of producing the food containing heat-treated vegetable]

A second aspect of the present invention relates to a process of producing the food containing heat-treated vegetable of the present invention (hereinafter also referred to as "the process of the present invention").

The process of the present invention includes subjecting vegetable to heat treatment to thereby prepare heat-treated vegetable. The heat treatment of vegetable may be carried out by any conventional method, but should preferably include steps (1) and (2) below, since these steps would facilitate adjusting the contents of the specific ingredients to a preferred balance.

In step (1), vegetable is heated at a predetermined heating temperature with stirring, until the mass of the vegetable falls below a predetermined ratio or less with respect to the mass of the vegetable before the heating. Heating "at a predetermined heating temperature" herein means that heating is continued under conditions that the center temperature of the vegetable being heated stays in the range of the "predetermined heating temperature", preferably for a period of time indicated below. In this regard, even if the temperature of the vegetable goes temporarily outside of the "predetermined heating temperature" range during heating, it is deemed that the heat treatment is substantially continued in the "predetermined heating temperature" range as long as such a deviation occurred only for, e.g., several minutes (e.g., within 5 minutes, preferably within 3 minutes). In step (1) of the process of the present invention, the vegetable is heated with stirring at a temperature of from 70°C to 120°C, until the mass of the vegetable is reduced to an amount of from 30 mass% to 70 mass% with respect to the the mass of the vegetable before heating.

In step (2), the vegetable heated in step (1) is then mixed with oil in an amount corresponding to a predetermined ratio with respect to the mass of the vegetable before the heating, and the mixture is further heated with stirring at a predetermined temperature. In the process of the invention, that predetermined temperature is of from 70°C to 120°C and the heating in step (2) is carried out until the resultant heat-treated vegetable satisfies:(a) 3,4-dimethylthiophene (x) in a content of from 0.00035 mg/kg to 3 mg/kg;(b) 2,4-dimethylthiophene (y) in a content of from 0.00015 mg/kg to 3 mg/kg; and(c) furfural (z) in a content of from 0.1 mg mg/kg to 10 mg/kg.

The process of the present invention may also include additional steps as necessary, such as the step of adjusting each of the contents of 3,4-dimethylthiophene, 2,4-dimethylthiophene, and furfural (specific ingredients) to within a predetermined concentration range, and/or the step of adding/mixing one or more other materials or ingredients which may optionally be used.

*Step (1):

The "predetermined heating temperature" of the vegetable in step (1) is comprised within a range of 70°C or higher, particularly 80°C or higher, and 120°C or lower, particularly 110°C or lower.

The vegetable should preferably be heated at the "predetermined heating temperature" in step (1) for a period of, although not limited to, e.g., 30 minutes or longer, particularly 40 minutes or longer, and 120 minutes or shorter, particularly 110 minutes or shorter. The vegetable should also preferably be heated until the mass of the vegetable becomes 30 mass % or more, particularly 35 mass % or more, and 70 mass % or less, particularly 65 mass % or less, with respect to the mass of the vegetable before the heating.

In order to promote the volatilization of aromatic ingredients from the vegetables, the heating in step (1) should preferably be carried out under reduced pressure and/or ventilated conditions.

In order to promote the volatilization of moisture from the vegetable in step (1), a predetermined amount of sodium chloride should preferably be added to the vegetable before and/or during step (1). The amount of sodium chloride to be added may be, but not limited to, 1 mass % or more, particularly 1.5 mass % or more, and 10 mass % or less, particularly 7 mass % or less, with respect to the mass of the vegetable before the heating.

According to the present invention, sodium chloride may be added either in the form of a purified product or in the form of a mixture containing sodium chloride such as edible salt. When a mixture of sodium chloride with large amounts of impurities (e.g., rock salt) is used, the amount of the mixture to be added should preferably be adjusted in consideration of the content of sodium chloride.

*Step (2):

The amount of oil to be added in step (2) should preferably be, but not limited to, 1 mass % or more, particularly 2.5 mass % or more, and 10 mass % or less, particularly 7.5 mass % or less, with respect to the mass of the vegetable before the heating.

According to the present invention, examples of oil to be added include, although not limited to: sesame oil, rapeseed oil, soybean oil, palm fractionation oil (PMF), cottonseed oil, corn oil, sunflower oil, safflower oil, olive oil, linseed (amani) oil, rice oil, Japanese camellia (tsubaki) oil, Korean perilla (egoma) oil, grape seed oil, peanut oil, almond oil, avocado oil, salad oil, and canola oil.

The "predetermined heating temperature" of the vegetable in step (2) is of 70°C or higher, particularly 80°C or higher, and 120°C or lower, particularly 110°C or lower.

The vegetable should preferably be heated at the "predetermined heating temperature" in step (2) for a period of, although not limited to, e.g., 9 minutes or longer, particularly 12 minutes or longer, and 50 minutes or shorter, particularly 40 minutes or shorter. When the contents of the specific ingredients (3,4-dimethylthiophene, 2,4-dimethylthiophene, and furfural) are not adjusted via addition of these ingredients externally but are adjusted via heating of the vegetable (i.e., in the case of the first method mentioned later), the vegetable should also preferably be heated in this step at least until each content of the specific ingredients (3,4-dimethylthiophene, 2,4-dimethylthiophene, and furfural) of the heat-treated vegetable satisfies the predetermined concentration range.

There is no particular limitation to the apparatus for the heat treatment of the vegetable, as long as it can be heated at a constant temperature with stirring so that steps (1) and (2) above can be performed. The apparatus should more preferably accommodate a device for promoting volatilization of heated steam via ventilation and/or reduced pressure. However, in order to carry out large-scale production of the heat-treated vegetable, it is preferred to use a cylindrical process tank capable of controlling the heating temperature and stirring speed, from the viewpoint of productivity. An example of such a process tank is Leonida KH by Kajiwara Co., Ltd.

*Adjustment of the specific ingredient concents:

Methods for adjusting each content of 3,4-dimethylthiophene, 2,4-dimethylthiophene, and furfural (specific ingredients) in the food of the present invention to within the specific concentration range include: the method of adjusting the content of each specific ingredient by carrying out steps (1) and (2) above to heat the vegetable (first method); and the method of adding these specific ingredients (or substances containing these specific ingredients) to the vegetable before, during, or after the heating (second method). In the case of the first method, the contents of the specific ingredients can be easily adjusted to a suitable balance by carrying out steps (1) and (2) under the preferred conditions. In the case of the second method, these specific ingredients (or substances containing these specific ingredients) may be added to the vegetable before or during the heating in steps (1) and/or (2) and heated together with the vegetable. Alternatively, they may be added to, and mixed with, the heat-treated vegetable after competion of the heating in steps (1) and/or (2).

* Addition and Mixing of other materials and ingrediens:

If the food of the present invention contains other materials or ingredients that are optionally used in addition to the heat-treated vegetable, such other materials or ingredients may be added to, and mixed with, the vegetables. In this case, such other materials or ingredients may be added to the vegetable before or during the heating in steps (1) and/or (2) and heated together with the vegetable. Alternatively, they may be added to, and mixed with, the heat-treated vegetable after competion of the heating in steps (1) and/or (2). On the other hand, if the food of the present invention does not contain any materials or ingredients other than the heat-treated vegetable, such a step is unnecessary.

[Method for reducing unpleasant taste of vegetable]

A third aspect of the present invention relates to a method for reducing unpleasant taste of vegetable. This method includes carrying out heat treatment of the vegetable in accordance with the process of the present invention to thereby prepare the food containing heat-treated vegetable of the present invention. Details of the method are the same as those explained above for the food containing heat-treated vegetable of the present invention and the process of producing the same.

**EXAMPLES**

The present invention will then be explained in further details by reference to the examples below, which are presented for the purpose of illustration only and should in no way be construed as limiting the present invention.

[Preparation of food samples]

Food samples of Examples a1 to a10 and Comparative Examples b1 to b8 were prepared as shown in Table 1 below.

[Table 1]

Table 1

| | | | | specific ingredient | | |
| | | Any ingredient added? | Base food for addition | 3,4-dimethyl thiophene | 2,4-dimethyl thiophene | furfural |
| | | | | mg/kg | mg/kg | mg/kg |
| Example | a1 | No | | | | |
| Example | a2 | No | | | | |

(continued)

| | | specific ingredient | | | | |
|---|---|---|---|---|---|---|
| | | Any ingredient added? | Base food for addition | 3,4-dimethyl thiophene | 2,4-dimethyl thiophene | furfural |
| | | | | mg/kg | mg/kg | mg/kg |
| Example | a3 | Yes | Example | 1.83 | 1.58 | - |
| Example | a4 | Yes | Example | 2.63 | 2.08 | 0.51 |
| Example | a5 | Yes | Example a2 | - | - | 0.17 |
| Example | a6 | Yes | Example a2 | - | - | 9.17 |
| Example | a7 | No | | | | |
| Example | a8 | No | | | | |
| Example | a9 | No | | | | |
| Example | a10 | No | | | | |
| Comparative Example | b1 | No | | | | |
| Comparative Example | b2 | Yes | Example b1 | 4.07 | 4.87 | - |
| Comparative Example | b3 | Yes | Example | - | 4.08 | 0.51 |
| Comparative Example | b4 | Yes | Example | 4.63 | - | 0.51 |
| Comparative Example | b5 | Yes | b1 | - | - | 14.91 |
| Comparative Example | b6 | No | | | | |
| Comparative Example | b7 | Yes | b6 | 2.00 | - | - |
| Comparative Example | b8 | Yes | b6 | - | 2.00 | - |

The samples of Examples and Comparative Examples without addition of any specific ingredients were prepared as follows.

*Preparation of Examples a1 and a2:*

1. 50 kg of frozen onion (frozen after being cut into 10 mm squares) and 2 kg of sodium chloride were put into a process tank (PC-5150, $\varphi$594 mm, Soren).
2. The mixture was then heated under the conditions shown below. During heating, the lid was closed while ventilation was performed for actively promoting the volatilization of aromatic ingredients from the vegetable.

Product temperature: 100°C
Stirring speed: 30rpm
The above conditions were continued for 60 minutes until the mass reached 25 kg.
At this stage, a part of the sample was collected and used as the sample of Example a1.

3. When the vegetable mass reached 25 kg (the amount of salt was subtracted), 3 kg of oil (olive oil) was added.
4. The mixture was then heated under the conditions shown below. During heating, no ventilation was performed, while the aroma ingredients were volatilized by opening the lid.

Temperature: 100 °C
Stirring speed: 30rpm
The above conditions were continued for 20 minutes until the mass reached 20 kg.

5. When the vegetable mass reached 20 kg (as corrected by subtracting the amounts of oil and salt), heating was stopped, and 20 kg of water was added. Stirring was continued during this operation. A part of this sample was taken and used as the sample of Example a2.

*Preparation of Comparative Example b1:

The frozen onion (frozen after being cut into 10 mm squares) used for preparing the samples of Examples a1 and a2 was used as the sample of Comparative Example b1.

*Preparation of Comparative Example b6:

1. Tomato sauce was prepared by mixing 62 mass % of tomato paste (Brix value: 15), 1.0 mass % of sodium chloride, 1.6 mass % of soybean oil, and the remainder of water with stirring.
2. 500 g of the above mixture was heated (set temperature: 95 °C; kept at the temperature for 5 minutes) with stirring, and the resultant tomato sauce was filled in a pouch as the sample of Comparative Example b6.

*Preparation of Examples a7 to a10:

1. Tomato sauce was prepared by mixing 62 mass % of tomato paste (Brix value: 15), salt 1.0 mass %, and soybean oil 1.6 mass %, and a predetermined amount of the sample of Example a1 (1.5 mass % for Example a7, 2.5 mass % for Example a8, 10 mass % for Example a9, and 20 mass % for Example a10), to which water was added as the balance, followed by stirring and mixing.
2. 500 g of the above mixture was heated (set temperature: 95 °C; kept at the temperature for 5 minutes) with stirring, and the resultant tomato sauce was filled in a pouch as the sample of each of Examples a7 to a10.

* Addition of specific ingredients:

The samples of Examples and Comparative Examples with addition of any specific ingredients were prepared by using the following substances as the specific ingredients, each diluted to a high concentration with ethanol, and adding the deluted specific ingredient to the sample of the corresponding Example or Comparative Example with addition of any specific ingredients, so that the resultant concentration of each specific ingredient reaches the value shown in Table 1 above.

*3,4-Dimethylthiophene (Thiophene,3,4-dimethyl-: CAS No.632-15-5; Combi-Blocks, Inc.)
*2,4-Dimethylthiophene (Thiophene,2,4-dimethyl-: CAS No.638-00-6; Fuji Film Wako Chemical Corp.)
*Furfural (Furfural: CAS No.98-01-1; Tokyo Chemical Industry Co., Ltd.)

[Measurement of specific ingredients]

The contents of 3,4-dimethylthiophene, 2,4-dimethylthiophene, and furfural as specific ingredients were measured using a gas chromatography/mass spectrometer (GC/MS) by the following method.
First, each sample of the Examples and the Comparative Examples were subjected to Pretreatments 1 to 6 below to prepare a measurement sample.

1. From each sample of the Examples and the Comparative Examples, 10 g was collected as a measurement sample. However, when the sample consists only of heat-treated vegetable, ion-exchanged water was added so as to correspond to the mass of the vegetable before heating. (For example, when heat-treated vegetable with a concentration rate of 50% was used as the measurement sample, 5 g of water was added to 5 g of the sample and the mixture was used as the measurement sample.)
2. Ion exchanged water was added to the measurement sample from Pretreatment 1 to adjust the total mass to 100 g.
3. After the dilution of Pretreatment 2, the measurement sample was filtered with a filter paper (No. 2), and the filtrate was put into a 20 mL headspace vial (flat bottom).
4. PDMS Twister (film thickness 0.5 mm, length 10 mm) (GERSTEL) was placed in the vial from Pretreatment 3, and shaken for 60 minutes to adsorb the ingredients.
5. After 60 minutes, the filtrate was removed from the vial of Pretreatment 4, and PDMS Twister was rinsed with ion-exchanged water.
6. After the rinsing of Pretreatment 5, the moisture was wiped off with a Kimwipe, and the sample in the PDMS Twister was used as a measurement sample.

*Measurement method:

The measurement sample prepared above was subjected to measurement of the specific ingredients using Gestell 1-dimensional 2-dimensional switching GC-MS (GC part: HP7890 Series GC System connected to LTM series II (both manufactured by Agilent), inlet: TDU2/CIS4 (Gestel), autosampler: MPS (Gestel)).

As capillary columns, DB-WAX (length 30 m, inner diameter 250 $\mu$m, film thickness 0.25 $\mu$m, for LTM) (Agilent) was used as a one-dimensional column, and DB-5 (length 10 m, inner diameter 180 $\mu$m, film thickness 0.4 $\mu$m, for LTM) (Agilent) was used as a two-dimensional column. Helium was used as the carrier gas.

Of the specific ingredients, furfural was measured by one-dimensional analysis, while 3,4-dimethylthiophene and 2,4-dimethylthiophene were measured by two-dimensional analysis. The injection was performed using one PDMS twister that had been subjected to the above pretreatment, and the injection conditions were all as follows.

*CIS4:
Maintained at 10 °C for 0.5 minutes, then heated up to 240 °C at 720 °C/minute.
*TDU2:
Maintained at 30 °C for 0.2 minutes, then heated up to 240 °C at 720 °C/minute.

For the measurement of 3,4-dimethylthiophene and 2,4-dimethylthiophene, the sample was injected into a one-dimensional column under the above injection conditions, backflushing was performed during a period between at 12 minutes and at 16 minutes from the start of measurement, and the specific ingredients were introduced into a two-dimensional column for separation, and subjected to SIM analysis. The column oven conditions for DB-WAX (one-dimensional column) and DB-5 (two-dimensional column) were as follows.

*DB-WAX (one-dimensional column):

Maintained at 40 °C for 3 minutes, then heated at 5 °C/minute, and then cut off at 41.5 minutes from the start of measurement.

*DB-5 (two-dimensional column):

Maintained at 40 °C for 16.5 minutes, then heated to 240 °C at 20 °C/minute, and then maintained for 15 minutes.

For the measurement of furfural, the sample was injected under the above injection conditions, separated with a one-dimensional column, and subjected to SIM analysis. The column oven conditions for DB-WAX (one-dimensional column) were as follows. *DB-WAX (one-dimensional column):

Maintained at 40 °C for 3 minutes, then heated to 240 °C at 5 °C/minute, and then maintained for 7 minutes.

The concentration of each specific ingredient in each measurement sample was calculated from the area of the quantitative ion of the corresponding standard substance shown in Table 2 below, which was measured in the selected ion detection (SIM) mode, and was corrected in consideration of the dilution ratio with water.

[Table 2]

Table 2

| | Quantitation ion | Confirmation ion 1 | Confirmation ion 2 |
|---|---|---|---|
| 3,4-Dimethyl thiophene | 111 | 97 | 112 |
| 2,4-Dimethyl thiophene | 111 | 97 | 112 |
| Furfural | 95 | 96 | 67 |

Peaks with a ratio of peak signal to base noise (S/N ratio) of less than 10 were determined as not-detectable (ND), since noise was so large that quantification was difficult.

The measurement results of the contents of 3,4-dimethylthiophene, 2,4-dimethylthiophene, and furfural in each sample of the Examples and Comparative Examples are shown in Table 3 below.

[Table 3]

Table 3

|  |  | 3,4-Dimethyl thiophene (x) | 2,4-Dimethyl thiophene (y) | Furfural (z) | (x+y)/z |
|---|---|---|---|---|---|
|  |  | mg/kg | mg/kg | mg/kg |  |
| Example | a1 | 0.3690 | 0.92436 | 0.4922 | 2.6276 |
| Example | a2 | 0.0038 | 0.00955 | 0.8270 | 0.0162 |
| Example | a3 | 2.2000 | 2.50000 | 0.4922 | 9.5483 |
| Example | a4 | 3.0000 | 3.00000 | 1.0000 | 6.0000 |
| Example | a5 | 0.0038 | 0.00955 | 1.0000 | 0.0134 |
| Example | a6 | 0.0038 | 0.00955 | 10.0000 | 0.0013 |
| Example | a7 | 0.0004 | 0.00019 | 0.3144 | 0.0017 |
| Example | a8 | 0.0004 | 0.00028 | 0.3196 | 0.0021 |
| Example | a9 | 0.0007 | 0.00099 | 0.3586 | 0.0046 |
| Example | a10 | 0.0010 | 0.00195 | 0.4107 | 0.0072 |
| Comparative Example | b1 | 0.9345 | 0.13187 | 0.0855 | 12.468 |
| Comparative Example | b2 | 5.0000 | 5.00000 | 0.0855 | 116.924 |
| Comparative Example | b3 | 0.3690 | 5.00000 | 1.0000 | 5.369 |
| Comparative Example | b4 | 5.0000 | 0.92436 | 1.0000 | 5.924 |
| Comparative Example | b5 | 0.9345 | 0.13187 | 15.0000 | 0.0711 |
| Comparative Example | b6 | 0.0003 | 0.00004 | 0.3066 | 0.0011 |
| Comparative Example | b7 | 0.0003 | 2.00000 | 0.3066 | 6.5247 |
| Comparative Example | b8 | 2.00000 | 0.00004 | 0.3066 | 6.5238 |

[Content of heat-treated vegetable]

The content of the heat-treated vegetable in each sample was determined by weighning the mass of the heat-treated vegetable using a weigh scale (load cell LC-1205 (A & D) for large capacity, precision scale HT-120 (A & D) for small capacity), and calculating the mass ratio with respect to the other materials in the sample.

The measurement results of teh heat-treated vegetable content in each sample of the Examples and the Comparative Examples are shown in Table 4 below.

[Table 4]

Table 4

|  |  | Content of heat-treated vegetable |
|---|---|---|
|  |  | Weight % |
| Example | a1 | 100 |
| Example | a2 | 100 |
| Example | a3 | 100 |
| Example | a4 | 100 |
| Example | a5 | 100 |

(continued)

|  |  | Content of heat-treated vegetable |
|---|---|---|
|  |  | Weight % |
| Example | a6 | 100 |
| Example | a7 | 1.5 |
| Example | a8 | 2.5 |
| Example | a9 | 10 |
| Example | a10 | 20 |
| Comparative Example | b1 | 0 |
| Comparative Example | b2 | 0 |
| Comparative Example | b3 | 100 |
| Comparative Example | b4 | 100 |
| Comparative Example | b5 | 0 |
| Comparative Example | b6 | 100 |
| Comparative Example | b7 | 100 |
| Comparative Example | b8 | 100 |

[Sensory evaluation]

Each sample was evaluated under the following conditions. Each evaluation was conducted by six sensory inspectors who conducted the following trainings.

Candidates were subjected to the identification trainings A) and B) below, and those with particularly excellent results were selected as sensory inspectors.

A) Test for distinguishing taste qualities: candidates were tested as to whether they could distinguish test samples for five taste qualities (sweetness: the taste of sugar; sourness: the taste of tartaric acid; umami: the taste of sodium glutamate; saltiness: the taste of sodium chloride; and bitterness: the taste of caffeine) and two control samples. Each test sample was an aqueous solution of the corresponding standard substance at a concentration slightly higher than its threshold, while each control sample was distilled water.

B) Test for distinguishing taste strength: candidates were tested as to whether they could distinguish five aqueous solutions of sodium chloride at different concentrations and five aqueous solutions of acetic acid at different concentrations.

Each sample was evaluated for the following two evaluation items:

*Unpleasant taste of vegetable :

5: Excellent, as the unpleasant taste was not scented at all.
4: Good, as the unpleasant taste was scarcely scented.
3: Acceptable, as the unpleasant taste was scented.
2: Not very good, as the unpleasant taste was somewhat scented.
1: Not good, as the unpleasant taste was strongly scented.

*Cooked feel of vegetable

5: Excellent, as the cooked feel was strongly scented.
4: Good, as the cooked feel was somewhat scented.
3: Acceptable, as the cooked feel was scented.
2: Not very good, as the cooked feel was scarcely scented.
1: Not good, as the cooked feel was not scented at all.

The results of the sensory evaluations are shown in Table 5 below. Each score in the table is a value obtained by calculating the average score of the six sensory inspectors and rounding off to the first decimal place. The samples of the Examples were satisfactory with scores of 3 or higher for both the unpleasant taste of vegetable and the cooked feel of vegetable, while the samples of the Comparative Examples were unsatisfactory with scores of 2 or lower for both evaluation items.

[Table 5]

Table 5

| | | Unpleasant taste of vegetable | Cooked feel of vegetable |
|---|---|---|---|
| Example | a1 | 4 | 4 |
| Example | a2 | 5 | 5 |
| Example | a3 | 3 | 3 |
| Example | a4 | 3 | 3 |
| Example | a5 | 4 | 4 |
| Example | a6 | 3 | 3 |
| Example | a7 | 3 | 3 |
| Example | a8 | 4 | 4 |
| Example | a9 | 3 | 3 |
| Example | a10 | 3 | 3 |
| Comparative Example | b1 | 1 | 2 |
| Comparative Example | b2 | 1 | 1 |
| Comparative Example | b3 | 1 | 2 |
| Comparative Example | b4 | 1 | 2 |
| Comparative Example | b5 | 2 | 1 |
| Comparative Example | b6 | 1 | 1 |
| Comparative Example | b7 | 1 | 1 |
| Comparative Example | b8 | 1 | 1 |

[Industrial Applicability]

The present invention is widely useful in the food industry, since it enables the production of a food containing heat-treated vegetable that not only has cooked feel of vegetables but also exhibits reduced unpleasant taste of vegetables.

**Claims**

1. A food comprising heat-treated vegetable, comprising.

    (a) 3,4-dimethylthiophene (x) in a content of from 0.00035 mg/kg to 3 mg/kg;
    (b) 2,4-dimethylthiophene (y) in a content of from 0.00015 mg/kg to 3 mg/kg; and
    (c) furfural (z) in a content of from 0.1 mg/kg to 10 mg/kg.

2. A food according to claim 1, which satisfies the following formula:

$$10 \geqq (x \, (mg/kg) + y \, (mg/kg)) / z \, (mg/kg) \geqq 0.0005 \qquad \text{[Formula 1]}$$

**3.** A food according to claim 1 or 2, wherein the vegetable is Allium.

**4.** A food according to claim 3, wherein Allium is one or more selected from onion, Welsh onion (negi), leek, and garlic.

**5.** A food according to any one of claims 1 to 4, wherein the content of the heat-treated vegetable is 1.5 mass % or more.

**6.** A process for producing a food according to any one of claims 1 to 5, comprising:

(1) heating vegetable with stirring at a temperature of from 70°C to 120°C, until the mass of the vegetable is reduced to an amount of from 30 mass % to 70 mass % with respect to the mass of the vegetable before heating; and
(2) adding, to the heated vegetable from step (1), oil in an amount of from 1 mass % to 10 mass % with respect to the mass of the vegetable before the heating, and further heating the vegetable with stirring at a temperature of from 70°C to 120°C,

wherein the heating in step (2) is carried out until the resultant heat-treated vegetable satisfies:

(a) 3,4-dimethylthiophene (x) in a content of from 0.00035 mg/kg to 3 mg/kg;
(b) 2,4-dimethylthiophene (y) in a content of from 0.00015 mg/kg to 3 mg/kg; and
(c) furfural (z) in a content of from 0.1 mg/kg to 10 mg/kg.

**7.** A process according to claim 6, wherein step (1) comprises depressurization treatment and/or ventilation treatment.

**8.** A process according to claim 6 or 7, further comprising, before or during step (1), adding, to the vegetable, sodium chloride in an amount of from 1% to 10% of the mass of the vegetable before the heating.

**9.** A process according to any one of claims 6 to 8, further comprising, before, during, or after the heating in step (1) and/or step (2), adding to the vegetable one or more selected from 3,4-dimethylthiophene, 2,4-dimethylthiophene, and furfural.

**10.** A method for reducing unpleasant taste of vegetable, comprising:
adjusting the contents of a food containing heat-treated vegetable so as to comprise:

(a) 3,4-dimethylthiophene (x) in a content of from 0.00035 mg/kg to 3 mg/kg;
(b) 2,4-dimethylthiophene (y) in a content of from 0.00015 mg/kg to 3 mg/kg; and
(c) furfural (z) in a content of from 0.1 mg/kg to 10 mg/kg.

**Patentansprüche**

**1.** Wärmebehandeltes Gemüse umfassendes Lebensmittel, das Folgendes umfasst:

(a) 3,4-Dimethylthiophen (x) in einem Gehalt von 0,00035 mg/kg bis 3 mg/kg,
(b) 2,4-Dimethylthiophen (y) in einem Gehalt von 0,00015 mg/kg bis 3 mg/kg und
(c) Furfural (z) in einem Gehalt von 0,1 mg/kg bis 10 mg/kg.

**2.** Lebensmittel nach Anspruch 1, das die folgende Formel erfüllt:

$$10 \geq (x \ (mg/kg) + y \ (mg/kg)) / z \ (mg/kg) \geq 0{,}0005 \qquad \text{[Formel 1]}$$

**3.** Lebensmittel nach Anspruch 1 oder 2, wobei das Gemüse Allium ist.

**4.** Lebensmittel nach Anspruch 3, wobei das Allium eines oder mehrere, ausgewählt aus Zwiebel, Winterzwiebel (Negi), Lauch und Knoblauch ist.

**5.** Lebensmittel nach einem der Ansprüche 1 bis 4, wobei der Gehalt des wärmebehandelten Gemüses 1,5 Massen-% oder mehr beträgt.

**6.** Verfahren zur Herstellung eines Lebensmittels nach einem der Ansprüche 1 bis 5, das Folgendes umfasst:

(1) das Erhitzen von Gemüse unter Rühren auf eine Temperatur von 70 °C bis 120 °C, bis die Masse des Gemüses auf eine Menge von 30 Massen-% bis 70 Massen-%, bezogen auf die Masse des Gemüses vor dem Erhitzen, verringert ist, und
(2) das Zusetzen von Öl in einer Menge von 1 Massen-% bis 10 Massen-%, bezogen auf die Masse des Gemüses vor dem Erhitzen, zu dem erhitzten Gemüse aus Schritt (1) und das weitere Erhitzen des Gemüses unter Rühren auf eine Temperatur von 70 °C bis 120 °C;

wobei das Erhitzen in Schritt (2) durchgeführt wird, bis das resultierende wärmebehandelte Gemüse Folgendes erfüllt:

(a) 3,4-Dimethylthiophen (x) in einem Gehalt von 0,00035 mg/kg bis 3 mg/kg,
(b) 2,4-Dimethylthiophen (y) in einem Gehalt von 0,00015 mg/kg bis 3 mg/kg und
(c) Furfural (z) in einem Gehalt von 0,1 mg/kg bis 10 mg/kg.

**7.** Verfahren nach Anspruch 6, wobei Schritt (1) eine Druckentlastungsbehandlung und/oder eine Belüftungsbehandlung umfasst.

**8.** Verfahren nach Anspruch 6 oder 7, das vor oder während Schritt (1) weiters das Zusetzen von Natriumchlorid in einer Menge von 1 % bis 10 % der Masse des Gemüses vor dem Erhitzen umfasst.

**9.** Verfahren nach einem der Ansprüche 6 bis 8, das vor, während oder nach dem Erhitzen in Schritt (1) und/oder Schritt (2) weiters das Zusetzen von einem oder mehreren, ausgewählt aus 3,4-Dimethylthiophen, 2,4-Dimethylthiophen und Furfural umfasst.

**10.** Verfahren zum Verringern von unangenehmem Geschmack eines Gemüses, das Folgendes umfasst:
das Einstellen des Gehalts eines Lebensmittels, das wärmebehandeltes Gemüse enthält, damit dieses Folgendes umfasst:

(a) 3,4-Dimethylthiophen (x) in einem Gehalt von 0,00035 mg/kg bis 3 mg/kg,
(b) 2,4-Dimethylthiophen (y) in einem Gehalt von 0,00015 mg/kg bis 3 mg/kg und
(c) Furfural (z) in einem Gehalt von 0,1 mg/kg bis 10 mg/kg.

**Revendications**

**1.** Aliment comprenant un légume traité thermiquement, comprenant :

a) du 3,4-diméthylthiophène (x) à une teneur comprise entre 0,00035 mg/kg et 3 mg/kg ;
(b) du 2,4-diméthylthiophène (y) à une teneur comprise entre 0,00015 mg/kg et 3 mg/kg ; et
c) du furfural (z) à une teneur comprise entre 0,1 mg/kg et 10 mg/kg.

**2.** Aliment selon la revendication 1, qui satisfait à la formule suivante :

$$10 \geqq (x \ (mg/kg) + y \ (mg/kg))/z \ (mg/kg) \geqq 0,0005$$
[Formule 1]

**3.** Aliment selon la revendication 1 ou 2, dans lequel le légume est l'Allium.

**4.** Aliment selon la revendication 3, dans lequel l'Allium est un ou plusieurs choisis parmi l'oignon, l'oignon gallois (negi), le poireau et l'ail.

**5.** Aliment selon l'une quelconque des revendications 1 à 4, dans lequel la teneur du légume traité thermiquement est de 1,5 % en masse ou plus.

**6.** Procédé de production d'un aliment selon l'une quelconque des revendications 1 à 5, comprenant les étapes consistant à :

(1) chauffer le légume sous agitation à une température de 70°C à 120°C, jusqu'à ce que la masse du légume soit réduite à une quantité de 30 % en masse à 70 % en masse par rapport à la masse du légume avant de le chauffer ; et

(2) ajouter, au légume chauffé de l'étape (1), de l'huile en une quantité de 1 % en masse à 10 % en masse par rapport à la masse du légume avant le chauffage, et chauffer en outre le légume sous agitation à une température de 70°C à 120°C,

dans lequel le chauffage de l'étape (2) est effectué jusqu'à ce que le légume traité thermiquement résultant satisfasse :

a) du 3,4-diméthylthiophène (x) à une teneur comprise entre 0,00035 mg/kg et 3 mg/kg ;
(b) du 2,4-diméthylthiophène (y) à une teneur comprise entre 0,00015 mg/kg et 3 mg/kg ; et
(c) du furfural (z) à une teneur comprise entre 0,1 mg/kg et 10 mg/kg.

7. Procédé selon la revendication 6, dans lequel l'étape (1) comprend un traitement de dépressurisation et/ou un traitement de ventilation.

8. Procédé selon la revendication 6 ou 7, comprenant en outre, avant ou pendant l'étape (1), l'ajout, au légume, de chlorure de sodium en une quantité de 1 % à 10 % de la masse du légume avant le chauffage.

9. Procédé selon l'une quelconque des revendications 6 à 8, comprenant en outre, avant, pendant ou après le chauffage dans l'étape (1) et/ou l'étape (2), l'ajout au légume d'un ou de plusieurs éléments choisis parmi le 3,4-diméthylthiophène, le 2,4-diméthylthiophène et le furfural.

10. Procédé de réduction du goût désagréable d'un légume, comprenant les étapes consistant à :
ajuster les teneurs d'un aliment contenant un légume traité thermiquement de manière à comprendre :

a) du 3,4-diméthylthiophène (x) à une teneur comprise entre 0,00035 mg/kg et 3 mg/kg ;
(b) du 2,4-diméthylthiophène (y) à une teneur comprise entre 0,00015 mg/kg et 3 mg/kg ; et
c) du furfural (z) à une teneur comprise entre 0,1 mg/kg et 10 mg/kg.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004267128 A
- JP 2010142147 A
- JP 2003000181 A

**Non-patent literature cited in the description**

- **TOKITOMO Y**. *Nippon Shokuhin Kagaku Kaishi*, 1995, vol. 42 (12), 1003-1011
- *CHEMICAL ABSTRACTS*, 632-15-5
- *CHEMICAL ABSTRACTS*, 638-00-6
- *CHEMICAL ABSTRACTS*, 98-01-1